# EUROPÄISCHE PATENTSCHRIFT

(11) **EP 3 009 811 B1**
(45) Veröffentlichungstag und Bekanntmachung des Hinweises auf die Patenterteilung: **21.06.2017**
(21) Anmeldenummer: 15183188.0
(22) Anmeldetag: 31.08.2015
(51) Int. Cl.: G01D 11/24

(54) **SENSORANORDNUNG UND VERFAHREN ZUR HERSTELLUNG EINER SENSORANORDNUNG**
SENSOR ASSEMBLY AND METHOD FOR PRODUCING A SENSOR ASSEMBLY
SYSTÈME DE CAPTEUR ET PROCÉDÉ DE FABRICATION D'UN SYSTÈME DE CAPTEUR

(30) Priorität: 16.10.2014 DE 102014220974
(43) Veröffentlichungstag der Anmeldung: 20.04.2016
(73) Patentinhaber: ROBERT BOSCH GMBH, 70442 Stuttgart (DE)
(72) Erfinder: Kaess, Udo, 74399 Walheim (DE); Droigk, Thorsten, 71640 Ludwigsburg (DE); Kukawka, Olivier, 71636 Ludwigsburg (DE); Weiberle, Peter, 74343 Sachsenheim (DE)

(56) Entgegenhaltungen:
- EP-A2- 1 619 506
- WO-A1-2006/063884
- DE-A1-102009 000 428
- US-A- 5 250 925
- US-A- 6 157 186

## Beschreibung

### Stand der Technik

Die Erfindung betrifft eine Sensoranordnung, insbesondere für ein Kraftfahrzeuggetriebe, und ein Verfahren zur Herstellung einer solchen Sensoranordnung

Für die Ansteuerung von Kraftfahrzeuggetrieben eingesetzte Getriebesteuermodule weisen Sensoranordnungen auf, welcher zur Erfassung physikalischer Größen, wie Drehzahl, Druck, Temperatur oder zur Erfassung der Position beweglicher Getriebeteile geeignet ausgebildet sind. Die Getriebesteuermodule mit den Sensoranordnungen werden im oder am Getriebe verbaut und müssen derart gestaltet sein, dass sie dem Getriebefluid ausgesetzt werden können. Darüber hinaus sind auch Sensormodule bekannt, die ohne elektronische Steuergeräte (TCU=Transmission Control Unit) direkt im Getriebe verbaut werden. Die jeweils eingesetzten Sensoranordnungen müssen in allen Fällen so ausgelegt werden, dass die dem Getriebefluid dauerhaft standhalten. Dies schafft erhöhte Anforderungen an den Aufbau derartiger Sensoranordnungen.

Aus der DE 10 2009 000 428 A1 ist eine Sensoranordnung für Kraftfahrzeuggetriebe bekannt, die einen Halter aus thermoplastischen Kunststoff umfasst, an dem als Stanzgitterteile ausgebildete Anschlusselemente eingespritzt sind. Die Anschlusselemente weisen von der Sensoranordnung abstehende Anschlussabschnitte zur äußeren Kontaktierung der Sensoranordnung auf. Die Sensoranordnung umfasst weiterhin ein auf eine Montagefläche des Halters aufgesetztes Sensorelement mit Kontaktelementen, wobei die Anschlusselemente an elektrischen Verbindungsstellen mit den Kontaktelementen elektrisch verbundenen sind. Zum Schutz des Sensorelements und der elektrischen Verbindungstellen ist ein Umhüllungsmaterial aus Duroplast im Transfermold-Verfahren auf den Halter aufgebracht. Dieses Umhüllungsmaterial deckt die Kontaktelemente, das Sensorelement und die offenliegenden Anschlussabschnitte der Anschlusselemente sowie die elektrischen Verbindungsstellen ab.

Weiterhin ist aus der US 5 508 611 eine Sensoranordnung bekannt, bei der ein magnetoresistives Sensorelement auf eine flexible Leiterbahnfolie montiert ist, die auf einem Permanentmagnet aufliegt. Ein Kunststoffmaterial ist über dem Sensorelement, der flexiblen Leiterbahnfolie und dem Permanentmagnet aufgebracht. Das Kunststoffmaterial ist relativ dick über dem Sensorelement aufgetragen, um Bondverbindungen zwischen dem Sensorelement und der flexiblen Leiterbahnfolie abzudecken.

Ferner ist aus der US 5 250 925 eine Sensoranordnung mit einem magnetoresistiven Sensorelement bekannt, dass in einen Deckel aus thermoplastischen Material eingebettet ist.

Aus der EP 1619 506 A2 ist eine Sensoranordnung mit einem Halter bekannt, bei der ein Deckelteil aus Kunststoff in einen Halter eingeführt wird. Das Deckelteil deckt in den Halter eingelassene Anschlusselemente und Kontaktelemente eines Sensorelementes sowie das Sensorelement teilweise ab. Die gesamte Anordnung wird in ein Gehäuse eingeschoben, welches auch das Sensorelement umgibt.

### Offenbarung der Erfindung

Die Erfindung betrifft eine Sensoranordnung, insbesondere für ein Kraftfahrzeuggetriebe, umfassend einen Halter mit daran angeordneten Anschlusselementen und ein Sensorelement mit Kontaktelementen, wobei das Sensorelement an einer Montagefläche des Halters angeordnet ist und die Anschlusselemente an elektrischen Verbindungsstellen mit den Kontaktelementen elektrisch verbundenen sind und die Sensoranordnung ein auf den Halter aufgebrachtes und wenigstens die Kontaktelemente und die elektrischen Verbindungstellen abdeckendes und das Sensorelement zumindest teilweise abdeckendes Umhüllungsmaterial aufweist. Erfindungsgemäß weist der Halter einen Montagesockel auf, an dem die Montagefläche ausgebildet ist, wobei der Montagesockel von einem Rahmenteil umgeben ist und das Rahmenteil sich in Richtung des Sensorelementes über die Montagefläche des Halters hinaus erstreckt und eine umlaufende Innenwandung aufweist, die parallel zur Montagefläche gesehen einen Vergussraum begrenzt, in den das Umhüllungsmaterial eingefüllt ist.

Weiterhin betrifft die Erfindung ein Verfahren zur Herstellung einer Sensoranordnung mit den Schritten: Herstellung eines Halters mit einer Montagefläche und mit an dem Halter angeordneten Anschlusselementen, Bereitstellung eines Sensorelements mit Kontaktelementen, Anordnung des Sensorelementes an der Montagefläche des Halters, Herstellung von elektrischen Verbindungsstellen zwischen den Anschlusselementen und den Kontaktelementen, Aufbringung eines wenigstens die Kontaktelemente und die elektrischen Verbindungstellen abdeckenden und das Sensorelement zumindest teilweise abdeckenden Umhüllungsmaterials auf den Halter. Erfindungsgemäß wird der Halter Montagesockel und mit einer Montagefläche hergestellt. Vor dem Schritt der Aufbringung des Umhüllungsmaterials und entweder vor oder nach dem Schritt der Herstellung der elektrischen Verbindungsstellen wird ein Rahmenteil an dem Halter angeordnet, das den Montagesockel umgibt, und das sich in Richtung des Sensorelementes über die Montagefläche des Halters hinaus erstreckt und eine umlaufende Innenwandung aufweist, die in einer Richtung parallel zur Montagefläche (33) gesehen einen Vergussraum begrenzt. Das Umhüllungsmaterial wird in einem Vergussverfahren in diesen Vergussraum eingefüllt.

### Vorteile der Erfindung

Vorteilhaft wird durch die Erfindung eine veränderte Bauform der Sensoranordnung erreicht, bei der die dem Messwertgeber zugewandte Sensorseite des Sensorelementes nur sehr dünn beschichtet ist oder sogar von der Abdeckung mit Umhüllungsmaterial ausgenommen ist, während die Kontaktelemente und elektrischen Verbindungsstellen zum Schutz vor Kurzschlüssen zuverlässig mit einer Schicht ausreichender Dicke aus Umhüllungsmaterial versehen sind. Der Abstand zwischen der Sensoranordnung und einem Messwertgeber, beispielsweise einem Geberrad oder einem linear beweglichen Teil, dessen Position erfasst werden soll, kann dadurch vorteilhaft verringert werden. Insbesondere bei der Anwendung von magnetischen Sensorelementen wird durch den dann kleineren "Luftspalt" zwischen der äußeren Sensorseite des Sensorelementes und der Geberstruktur eine Verbesserung des Messsignals erreicht. Außerdem wird durch die Anordnung des Sensorelementes in dem Vergussraum direkt unterhalb der Oberfläche des Umhüllungsmaterials vorteilhaft erreicht, dass im Vergussraum im Bereich des Sensorelementes keine eingeschlossenen Luftblasen oder Fehlstellen (Lunker) entstehen.

Dadurch, dass das Rahmenteil eine Stirnfläche aufweist, die mit der umlaufenden Innenwandung des Rahmenteils eine umlaufende Kante bildet, und dass das Umhüllungsmaterial in einer zu der Montagefläche senkrechten Richtung gesehen bis zu der umlaufenden Kante aufgefüllt ist, wird ein bündiger Übergang zwischen der von der Montagefläche abgewandten Oberfläche des Umhüllungsmaterials und der Stirnfläche des Rahmenteils erreicht, so dass sich hier keine Schmutzrückstände ansammeln können.

Als Positionierhilfe für das Rahmenteil ist an dem Halter an der von der Montagefläche abgewandten Seite eine Schulter angeformt ist, wobei die Schulter in einem Auflagebereich des Rahmenteils einen Außendurchmesser aufweist, der größer ausgebildet ist als der Durchmesser des Montagesockels. Die Schulter bildet einen Anschlag für das Rahmenteil und definiert dadurch das Übermaß, um welches das Rahmenteil von der Montagefläche absteht, und somit letztlich die Ausmaße des Vergussraums.

Wenn der Außendurchmesser des Rahmenteils dem Außendurchmesser der Schulter im Wesentlichen entspricht, wird eine Stufenbildung im Übergangsbereich des Außenmantels des Rahmenteils und der äußeren Wand der Schulter vermieden, so dass sich hier kein Schmutz ansammeln kann.

In einem vorteilhaften Ausführungsbeispiel ist vorgesehen, dass an einer Seitenwand des Montagesockels wenigstens ein von der Seitenwand abstehender Vorsprung angeformt ist, an dem wenigstens eines der Kontaktelemente festgelegt ist, und dass wenigstens ein Spalt zwischen der Seitenwand des Montagesockels und der Innenwandung des Rahmenteils mit Umhüllungsmaterial gefüllt ist und dass wenigstens eine elektrische Verbindungsstelle in dem wenigstens einen Spalt angeordnet ist. Bei diesem Ausführungsbeispiel können die Kontaktelemente und die Anschlusselemente vorteilhaft auch in einer Richtung senkrecht zur Sensorlängsachse verschweißt werden und die elektrischen Verbindungstellen sind in der fertigen Sensoranordnung sehr tief im Inneren und gut geschützt durch das den Spalt auffüllende Umhüllungsmaterial angeordnet.

Vorteilhaft kann das Umhüllungsmaterial auf der von dem Sensorelement abgewandten Seite eine äußere Oberfläche aufweist, die in Richtung zur Montagefläche hin gesehenen konkav gekrümmt ausgebildet ist. Die konkave Krümmung kann eine zur Krümmung eines Geberrades komplementäre Form bilden, so dass das Sensorelement sehr nahe am Geberrad angeordnet werden kann.

Besonders vorteilhaft ist die Sensoranordnung zur Erfassung eines magnetischen Signals ausgebildet ist. Das Sensorelement ist vorzugsweise ein Hallsensorelement, insbesondere ein Hall-IC oder ein ASIC mit Hall-IC.

Weiterhin vorteilhaft ist ein Verfahren zur Herstellung zur Herstellung einer derartigen Sensoranordnung, insbesondere für ein Kraftfahrzeuggetriebe, wie sich aus der nachfolgenden Beschreibung ergibt.

### Kurze Beschreibung der Zeichnungen

Es zeigen:
Fig. 1 eine aus dem Stand der Technik bekannte Sensoranordnung mit Geberrad,
Fig. 2 ein erstes Ausführungsbeispiel einer erfindungsgemäßen Sensoranordnung,
Fig. 3 ein zweites Ausführungsbeispiel einer erfindungsgemäßen Sensoranordnung,
Fig. 4 ein drittes Ausführungsbeispiel einer erfindungsgemäßen Sensoranordnung mit Geberrad,
Fig. 5 ein viertes Ausführungsbeispiel einer erfindungsgemäßen Sensoranordnung mit einer schräggestellten Montagefläche des Sensorelementes,
Fig. 6 ein fünftes Ausführungsbeispiel einer erfindungsgemäßen Sensoranordnung mit einem schräggestellten Montagesockel.

### Ausführungsformen der Erfindung

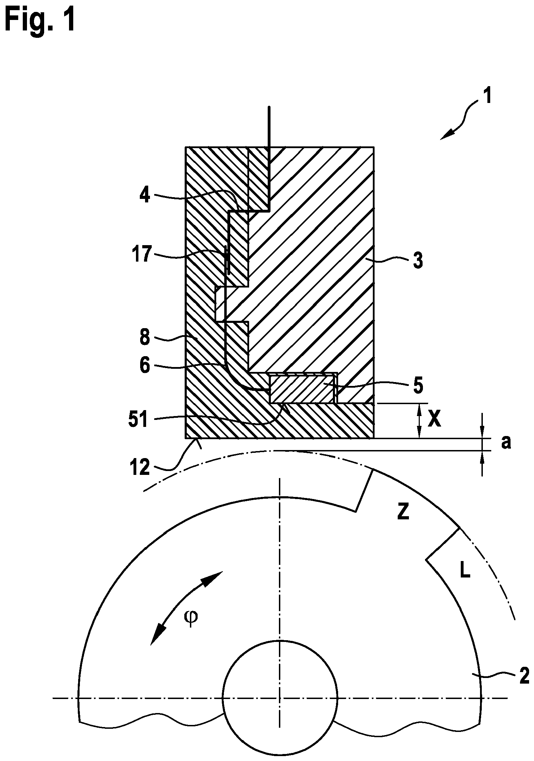

Fig. 1 zeigt einen aus dem Stand der Technik bekannten Aufbau einer Sensoranordnung. Dabei handelt es sich beispielsweise um die schematische Darstellung eines Getriebedrehzahlsensors, wie er in der DE 10 2009 000 428 A1 beschrieben wird. Die hier ausgeführten Darstellungen dienen, soweit sie den Stand der Technik betreffen, dem besseren Verständnis des Hintergrundes der Erfindung.

Die Sensoranordnung 1 in Fig. 1 umfasst einen im Spritzgussverfahren herstellten Halter 3 aus thermoplastischen Kunststoff, in den Anschlusselemente 4 eingespritzt sind, die gleichzeitig die äußeren Anschlüsse der Sensoranordnung bilden. Außerdem zeigt Fig. 1 ein Geberrad 2, das mit Zähnen Z und Zahnlücken L versehen ist. Das Geberrad rotiert in Richtung um den Winkel ϕ. Das für einen Drehzahlsensor benötigte Geberrad 2 ist hier nur zum besseren Verständnis dargestellt und ist nicht teil der Sensoranordnung 1. Im Kontext der Anmeldung wird also unter einer Sensoranordnung ein Messaufnehmer ohne Geberrad, wie er im oberen Teil der Fig. 1 dargestellt ist, verstanden. Das Geberrad 2 kann Magnetpole aufweisen. Ebenso ist es möglich, dass das Sensorelement 5 einen sogenannten Back-Bias-Magnet aufweist und das Geberrad keine Magnetpole aufweist. Zwischen der messempfindlichen Hallschicht des Sensorelementes und dem Geberrad besteht in beiden Fällen ein Magnetfeld, welches durch die Rotation der Zähne Z des Geberrades modifiziert wird.

Die Sensoranordnung 1 kann aber auch einen Positionssensor bilden, der kein Geberrad benötigt und der stattdessen die Position eines beweglichen und insbesondere auch eines linear beweglichen Teils erfasst, wobei hier auch magnetische Signale zur Erfassung der Messwerte eingesetzt werden können.

Bei dem Sensorelement 5 in der Fig. 1 handelt es sich um einen Hall-IC oder einen ASIC mit Hall-IC, der von dem Sensorelement abragende Kontaktelemente 6 in Form von Anschlussbeinchen aufweist. Die Kontaktelemente 6 sind an elektrischen Verbindungstellten 17 mit den Anschlusselementen 4 des Halters 3 elektrisch verbunden. Das Sensorelement 5, die Kontaktelemente 6 und der freiliegende Abschnitt der Anschlusselemente 4, welcher nicht zur äußeren Kontaktierung dient, sind mit einem Umhüllungsmaterial 8 abgedeckt. Das Umhüllungsmaterial 8 weist ein Duroplast, insbesondere ein Epoxidharz auf.

Bei der Herstellung derartiger Sensoranordnungen wird der Halter mit dem Sensorelement in eine Form eingesetzt. Sodann wird durch Zuführung niedriger Drücke und Temperaturen das Umhüllungsmaterial in die Form eingelassen. Aufgrund der Viskosität des Umhüllungsmaterials kann dieses in der Form nicht beliebig dünn über dem Sensorelement aufgebracht werden, sondern weist fertigungsbedingt eine Mindestdicke auf, die sicherstellt, dass die Kontaktelemente oder Verbindungstellen 17 zuverlässig abgedeckt sind. Dies führt dazu, dass sich zwischen der dem Geberrad 2 zugewandten Sensorseite 51 und der dem Geberrad zugewandten Stirnseite 12 des Umhüllungsmaterials 8 ein relativ großes Abstandsmaß X eingestellt. Zu diesem Abstandsmaß X addiert sich der Mindestabstand a des Geberrades 2 von der Stirnfläche 12 hinzu. Der Mindestabstand a des Geberrades 2 von der Stirnfläche 12 berücksichtigt Vibrationen, Drehschwingungen und Wärmeausdehnungen der einzelnen Komponenten. Somit entsteht ein magnetischer "Luftspalt" der Größe X + a zwischen der Sensorseite 51 und dem Geberrad 2. Aufgrund des mit der Entfernung abnehmenden Magnetfeldes wird die Messqualität der Sensoren mit zunehmendem Luftspalt schlechter, was vor allem beim Einsatz von kostengünstigen Ferritwerkstoffen nachteilig ist.

Diese Problematik ist nicht auf Drehzahlsensoren beschränkt, sondern trifft beispielsweise auch auf Positionssensoren zu, bei denen der Abstand zwischen der Sensorseite des Sensorelementes und dem beweglichen Teil, dessen Position erfasst werden soll, den "Luftspalt" bildet.

Es ist daher wünschenswert, die Sensoranordnung so auszugestalten, dass der Luftspalt X plus a möglichst klein wird. Hier ist wiederum das Abstandsmaß X die insbesondere ins Auge zu fassende Größe, denn das Abstandsmaß X hängt vom Aufbau der Sensoranordnung 1 ab.

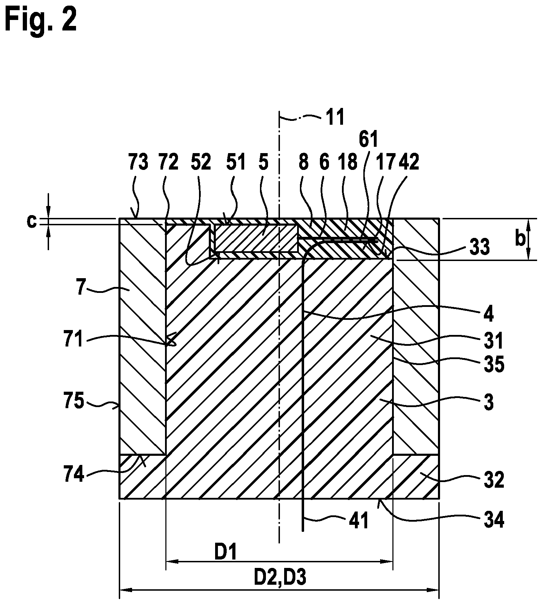

Ein erstes Ausführungsbeispiel einer erfindungsgemäßen Sensoranordnung 1 ist in Fig. 2 dargestellt. Das dort gezeigte Sensorelement 5 ist beispielsweise ein magnetisches Sensorelement, insbesondere ein Hallelement, ein Hall-IC oder ein ASIC (applicationspecific integrated circuit) mit Hall-IC. Die Erfindung wird am Beispiel eines Drehzahlsensors erläutert. Die Erfindung ist aber nicht auf Drehzahlsensoren beschränkt und kann auch andere Sensoren umfassen, beispielsweise Drucksensoren, Temperatursensoren, Positionssensoren und andere.

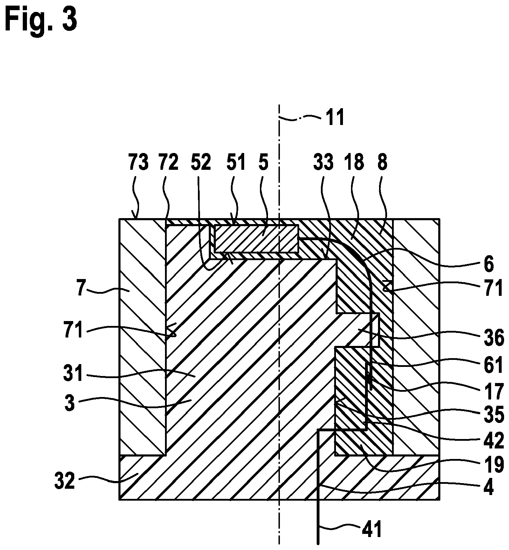

Wie in Fig. 2 zu erkennen ist, umfasst die Sensoranordnung 1 einen Halter 3 mit einer Montagefläche 33 für das Sensorelement 5. Eine Sensorlängsachse 11 bildet in diesem Ausführungsbeispiel eine zu der Montagefläche 33 senkrechte Achse der Sensoranordnung. Der Halter 3 weist einen Montagesockel 31 auf, an dessen dem Sensorelement 5 zugewandten Ende die Montagefläche 33 ausgebildet ist. An dem von der Montagefläche 33 abgewandten Ende des Montagesockels 31 ist eine Schulter 32 angeformt, die in einer Ebene senkrecht zur Sensorlängsachse 11 einen Außendurchmesser D2 aufweist, der im Auflagebereich eines Rahmenteils 7 größer ausgebildet ist als der Durchmesser D1 des Montagesockels 3. Der Halter 3 kann beispielsweise als Spritzgussteil aus thermoplastischem Material mit darin eingespritzten Anschlusselementen 4 ausgebildet sein. Die Anschlusselemente 4 können als Stanzgitterbahnen hergestellt sein. Anschlussabschnitte 41, 42 der Anschlusselemente 4 stehen jeweils an der Montagefläche 33 und an der der Montagefläche 33 gegenüberliegenden Unterseite 34 des Halters 3 von dem Halter ab. Die Anschlussabschnitte 41 an der Unterseite 34 dienen zur Kontaktierung der Sensoranordnung 1 mit externen Komponenten, beispielsweise einem Steuergerät. Die Anschlussabschnitte 42, welche von der Montagefläche 33 abstehen dienen zur Kontaktierung des Sensorelementes 5. Die von der Montagefläche 33 abstehenden Anschlussabschnitte 42 können beispielsweise parallel zur Montagefläche 33 verlaufen, wie beispielsweise in Fig. 2 gezeigt, oder umgebogen sein und senkrecht zur Montagefläche verlaufen, wie beispielsweise in Fig. 3 gezeigt.

Das Sensorelement 5 weist eine Sensorseite 51 und eine von der Sensorseite 51 abgewandte Montageseite 52 sowie Kontaktelemente 6 auf. Die Kontaktelemente 6 sind in Form von Anschlussbeinchen ausgebildet und stehen in Fig. 1 seitlich von dem Sensorelement 5 ab. Die Kontaktelemente 6 weisen an ihren Enden Kontaktabschnitte 61 auf. Das Sensorelement 5 ist mit der Montageseite 52 auf die Montagefläche 33 aufgesetzt, so dass die Kontaktabschnitte 61 der Kontaktelemente 6 flach auf den jeweils zugeordneten Anschlussabschnitten 42 der Anschlusselemente 4 aufliegen. Beispielsweise durch Schweißen sind die Kontaktabschnitte 61 mit den Anschlussabschnitten 42 an elektrischen Verbindungstellen 17 jeweils elektrisch verbunden. Der Anschlussabschnitt 42 kann wie dargestellt von der Montagefläche 33 abstehen oder beispielsweise auch in die Montagfläche 33 integriert sein, beziehungsweise flach in diese eingebettet sein.

Weiterhin ist ein Rahmenteil 7 vorgesehen, das umlaufend ausgebildet ist und beispielsweise hülsenartig, beziehungsweise zylinderwandförmig ausgebildet ist. Das Rahmenteil 7 ist vorzugsweise aus Kunststoff gefertigt, kann aber auch aus Metall oder einem anderen Material gefertigt sein. Das Rahmenteil 7 ist beispielsweise hülsenförmig ausgebildet. Im Querschnitt senkrecht zur Fig. 2 kann das Rahmenteil 7 beispielsweise einen kreisringförmigen oder rechteckrahmenförmigen Querschnitt aufweisen. Wie in Fig. 2 gut zu erkennen ist, ist das Rahmenteil 7 derart auf den Montagesockel 31 aufgeschoben, dass der Montagesockel 31 senkrecht zur Sensorlängsachse 11 gesehen von dem Rahmenteil 7 umgeben ist. Dabei gelangt das Rahmenteil 7 mit einer von seiner Stirnseite 73 abgewandten Unterseite 74 an der Schulter 32 des Halters 3 zur Anlage. Der Außendurchmesser D3 des Rahmenteils 7 entspricht im Wesentlichen vorzugeweise dem Außendurchmesser D2 der Schulter 32, so dass ein Außenmantel 75 des Rahmenteils 7 mit der Schulter 32 fluchtet und keine Kante oder Stufe im Übergangsbereich von Schulter 32 und Außenmantel 75 besteht. Dies ist aber nicht zwingend erforderlich und kann auch anders ausgebildet werden.

Das Rahmenteil 7 erstreckt sich von der Schulter 32 aus gesehen in Richtung des Sensorelements 5 über die Montagefläche 33 des Halters 3 hinaus und bildet dadurch einen Überstand, der um das Maß b von der Montagefläche 33 absteht. Zumindest im Bereich des Überstands, muss das Rahmenteil 7 eine umlaufende Innenwandung 71 aufweisen, die somit senkrecht zur Sensorlängsachse 11 gesehen einen Vergussraum 18 begrenzt. Unterhalb der Montagefläche 33 in Fig. 2 muss das Rahmenteil 7 nicht notwendig vollständig umlaufend ausgebildet sein und könnte beispielsweis auch Aussparungen aufweisen. Oberhalb der Montagefläche 33 muss das Rahmenteil aber umlaufend ausgebildet sein, damit die Vergussmasse bei der Herstellung nicht abfließen kann und ein an den Seiten und am Boden abgedichteter Vergussraum 18 besteht.

Dieser Vergussraum 18 ist mit einem Umhüllungsmaterial 8 gefüllt. Die Stirnfläche 73 des Rahmenteils 7 bildet mit der umlaufenden Innenwandung 71 eine umlaufende Kante 72. Das Umhüllungsmaterial 8 ist von der Montagefläche 33 in Richtung des Sensorelements 5, also in Fig. 3 senkrecht zur Montagefläche 33 gesehen vorzugsweise bis zu der umlaufenden Kante 72 aufgefüllt. Als Umhüllungsmaterial ist ein Duroplast, vorzugsweise insbesondere ein Epoxidharz oder Polyurethan, vorgesehen. Wie in Fig. 2 gut zu erkennen ist, gewährleistet das Rahmenteil 7, dass der Vergussraum 18 soweit mit dem Umhüllungsmaterial 8 gefüllt ist, dass die Kontaktelemente 6, die elektrischen Verbindungstellen 17 und auch die Anschlussabschnitte 42 der Anschlusselemente 4 vollständig von dem Umhüllungsmaterial abgedeckt sind. Darüber hinaus wird aber auch erreicht, dass das Umhüllungsmaterial 8 die Sensorseite 51 des Sensorelementes 5 mit einer dünnen Schicht der Dicke c abdeckt. Diese Dicke c ist kleiner als 0,2 mm und vorzugsweise kleiner als 0,1 mm und ist damit deutlich kleiner als das Abstandmaß X von 0,6 mm bei der Lösung nach dem Stand der Technik aus Fig. 1. In einer hier nicht dargestellten Ausführungsvarianter kann die Sensorseite 51 sogar von der Umhüllung ausgenommen sein und das Sensorelement nur an den Seiten mit dem Umhüllungsmaterial 8 abgedeckt sein. Die Dicke c in Fig. 2 beträgt dann Null, beziehungswiese ist nicht vorhanden. Da das Sensorelement 5 an seiner Oberfläche aus einem Material (z.B. Epoxidharz eines Gehäuses des Hall-IC) bestehen kann, das selbst dem Getriebefluid widerstehen kann, ist eine vollständige Abdeckung des Sensorelementes 5 nicht zwingend erforderlich. Wichtig ist, dass die Kontaktelemente 6 und die elektrischen Verbindungsstellen 17 geschützt sind. Der Verguss mit dem Umhüllungsmaterial 8 ist dabei so ausgeführt, dass, wie in Fig. 2 und 3 angedeutet ist, möglicherweise vorhandene Vorsprünge oder Erhebungen auf der Montagefläche 33 zuverlässig durch das Umhüllungsmaterial 8 abgedeckt sind, so dass die Außenseite der Sensoranordnung nur einen Übergangsbereich von Umhüllungsmaterial 8 und Rahmenteil 7 aufweist.

Ein zweites Ausführungsbeispiel ist in Fig. 3 dargestellt. Es versteht sich, das gleiche Bezugszeichen gleiche Teile bezeichnen. Im Unterschied zu Fig. 2 weist der Montagesockel 31 des Halters 3 in Fig. 3 eine Seitenwand 35 auf, an der wenigstens ein Vorsprung 36 angeformt ist. An dem Vorsprung 36 ist wenigstens eines der Kontaktelemente 6 beispielsweise durch Warmverstemmen festgelegt. Der Vorsprung 36 hält einen Kontaktabschnitt 61 des Kontaktelementes 6 in einer definierten Lage zu dem Anschlussabschnitt 42 des Anschlusselementes 4. Ausgehend von dem Vorsprung 36 ist das wenigstens eine Kontaktelement 6 derart umgebogen, dass das Sensorelement 5 mit der Montageseite 52 über der Montagefläche 33 des Halters 3 montiert ist. Zwischen der mit dem wenigstens einen Vorsprung 36 versehenen Seitenwand 35 des Montagesockels 31 und der Innenwandung 71 des Rahmenteils 7 ist ein sich parallel zur Sensorlängsachse 11 erstreckender Spalt 19 gebildet, der mit dem Vergussraum 18 in Verbindung steht. In diesem Spalt 19 ist die elektrische Verbindungstelle 17 angeordnet. Der Spalt 19 ist wie der Vergussraum 18 mit dem Umhüllungsmaterial 8 vollständig gefüllt.

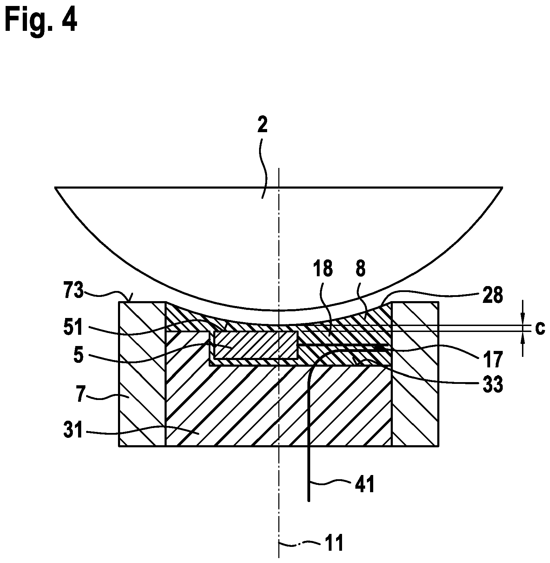

Fig. 4 zeigt ein drittes Ausführungsbeispiel. Bei diesem Ausführungsbeispiel ist Umhüllungsmaterial 8 in den Vergussraum 18 derart eingegossen, dass das Umhüllungsmaterial auf der von dem Sensorelement 5 abgewandten Seite eine äußere Oberfläche 28 aufweist, die in Richtung zur Montagefläche 33 hin gesehenen konkav gekrümmt ausgebildet ist. Ein Geberrad 2 kann dadurch in großer Nähe zu Sensoranordnung montiert werden. Auch bei diesem Ausführungsbeispiel ist das Sensorelement 5 auf der Sensorseite 51 mit einer dünnen Schicht von Umhüllungsmaterial 8 abgedeckt. Die Schicht weist mittig über der Sensorseite eine minimale Dicke c von weniger als 0,2 mm und vorzugsweise weniger als 0,1 mm auf. An den Rändern ist die Dicke des Umhüllungsmaterials 8 im Bereich der Innenwandung 71 aufgrund der konkaven Krümmung der Oberfläche 28 aber größer ausgebildet, so dass Getriebefluid schlecht in den Spalt zwischen der Innenwandung und dem Umhüllungsmaterial 8 ins Innere eindringen kann.

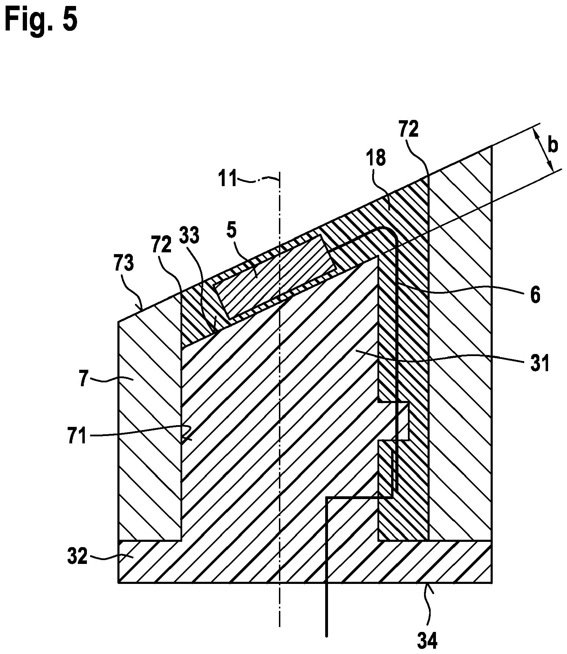

Fig. 5 zeigt ein weiteres Ausführungsbeispiel der Erfindung. Im Unterschied zu den Ausführungsbeispielen von Fig. 2 und 3 ist bei diesem Ausführungsbeispiel die Montagefläche 33 um einen Winkel schräg zur Sensorlängsachse 11 ausgebildet. Der Winkel der Neigung der Montagfläche 33 relativ zur Unterseite 34 der Sensoranordnung kann dabei unterschiedlichste Werte aufweisen und grundsätzlich einen weiten Winkelbereich überdecken.

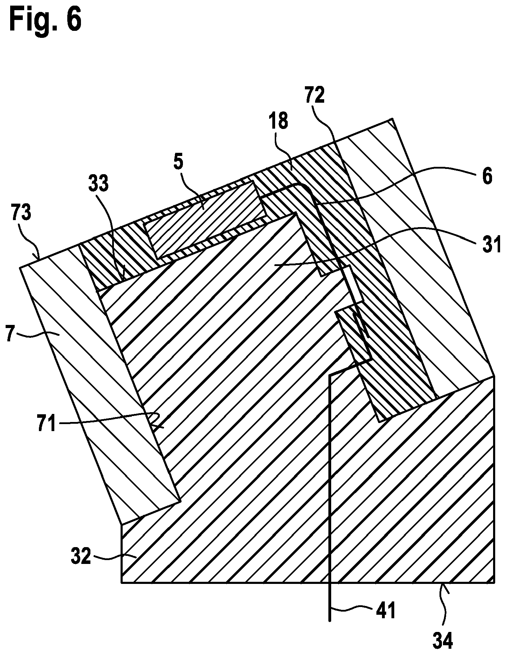

Fig. 6 zeigt ein weiteres Ausführungsbeispiel, bei dem nicht die Montagefläche 33, sondern auch das Rahmenteil 7 relativ zur Unterseite 41 der Sensoranordnung um einen Winkel geneigt ist. Dieser Winkel kann grundsätzlich jeden Wert zwischen 0° und 90° annehmen, wobei 0° dem Ausführungsbeispiel aus Fig. 3 entspricht.

Die Ausführungsbeispiele von Fig. 5 und Fig. 6 illustrieren, dass die Montagefläche 33 keineswegs zwingend senkrecht zu einer Sensorlängsachse 11 verlaufen muss und auch andere von 90° verschiedene Winkel dazu einnehmen kann.

Bei der Herstellung der Sensoranordnung aus den Figuren 2 bis 4 kann wie folgt verfahren werden: Zunächst wird der Halter 3 aus beispielsweise thermoplastischen Material mit einem Montagesockel 31 und mit einer Montagefläche 33 und mit an dem Halter 3 angeordneten Anschlusselementen 4 beispielsweise durch Umspritzen von Stanzgitterteilen, welche die Anschlusselemente 4 bilden, hergestellt. Sodann wird das Sensorelement 5 an dem Halter 3 montiert, indem das Sensorelement 5 mit der Montageseite 52 auf die Montagfläche 33 des Halters 3 aufgebracht wird. Nun können die elektrischen Verbindungstellen 17 durch beispielsweise Verschweißen mittels eines Lasers oder Widerstandsschweißen der Kontaktabschnitte 61 mit den Anschlussabschnitten 42 hergestellt werden. Bei der Ausführungsform von Fig. 3 kann das Schweißgerät beispielsweise aus einer Richtung senkrecht zur Sensorlängsachse 11 aufgesetzt werden. In Fig. 2 erfolgt die Schweißrichtung beispielsweise senkrecht zur Montagefläche 33.

Bei dem Ausführungsbeispiel in Fig. 3 muss das Rahmenteil im Anschluss an die Herstellung der elektrischen Verbindungstellen 17 an dem Halter montiert werden. In Fig. 2 kann die Montage des Rahmenteils 17 auch vor der Herstellung der elektrischen Verbindungstellen 17 erfolgen, da diese dann immer noch zugänglich sind.

Das Rahmenteil 7 kann auf den Halter beispielsweise aufgeschoben werden. Es ist aber auch möglich das Rahmenteil 7, beispielsweise bei dem Ausführungsbeispiel in Fig. 2, bereits während der Herstellung des Halters 3 mit diesem zu verbinden und den Halter 3 in das Rahmenteil 7 gleich mit einzuspritzen. In Fig. 2 und in Fig. 3 kann das Rahmenteil 7 aber auch nach der Herstellung des Halters 3 über den Montagesockel 31 geschoben werden, bis es an der Schulter 32 zur Anlage gelangt, wodurch das Überstandsmaß b des Rahmenteils 7 über die Montagefläche 33 definiert eingestellt wird und der Vergussraum 18 entsteht. Die umlaufende Innenwandung 71 des Rahmenteils 7 begrenzt den Vergussraum 18 senkrecht zur Sensorlängsachse 11 gesehen. Zur mechanischen Fixierung des Rahmenteils kann dieses auf den Montagesockel 33 aufgepresst oder in sonstiger Weise befestigt werden.

Nach der Montage des Sensorelementes 5 und nach der Herstellung der elektrischen Verbindungstellen 17 wird das Umhüllungsmaterial 8 in den derart gebildeten Vergussraum 18 eingefüllt. Das duroplastische Umhüllungsmaterial 8, beispielswiese Polyurethan oder Epoxidharz wird in flüssiger Form in den Vergussraum 18 gefüllt und füllt diesen vollständig auf. Dabei kann die Sensoranordnung einem Werkstückträger gehalten werden. Eine Aushärtung des Umhüllungsmaterials erfolgt bei Temperaturen von beispielsweise 130 °C. Die fertig herstellte Sensoranordnung 1 ist bis auf die externen Anschlussabschnitte 41 der Anschlusselemente 4 geschützt.

Bei der Herstellung der Sensoranordnungen aus Fig. 5 und Fig. 6 kann der Halter 3 in einen um einen Winkel geneigten Werkstückträger positioniert werden, der derartig um einen Winkel geneigt ist, dass die Montagefläche 33 während der Einfüllung des Umhüllungsmaterials 8 horizontal zur Gravitationskraft am Ort des Werkstückträgers ausgerichtet ist. Dies erleichtert vorteilhaft die Einfüllung des Umhüllungsmaterials 8 und das Auffüllen des Vergussraums 18.

## Patentansprüche

1. Sensoranordnung, insbesondere für ein Kraftfahrzeuggetriebe, umfassend einen Halter (3) mit daran angeordneten Anschlusselementen (4) und ein Sensorelement (5) mit Kontaktelementen (6), wobei das Sensorelement (5) an einer Montagefläche (33) des Halters (3) angeordnet ist und die Anschlusselemente (4) an elektrischen Verbindungsstellen (17) mit den Kontaktelementen (6) elektrisch verbundenen sind und die Sensoranordnung (1) ein auf den Halter (3) aufgebrachtes und wenigstens die Kontaktelemente (6) und die elektrischen Verbindungstellen (17) abdeckendes und das Sensorelement (5) zumindest teilweise abdeckendes Umhüllungsmaterial (8) aufweist, wobei der Halter (3) einen Montagesockel (31) aufweist, an dem die Montagefläche (33) ausgebildet ist, wobei der Montagesockel (31) von einem Rahmenteil (7) umgeben ist und das Rahmenteil (7) sich in Richtung des Sensorelements (5) über die Montagefläche (33) des Halters (3) hinaus erstreckt und eine umlaufende Innenwandung (71) aufweist, die in einer Richtung parallel zur Montagefläche (33) gesehen einen Raum begrenzt, in den das Umhüllungsmaterial (8) eingeführt ist, **dadurch gekennzeichnet, dass** der Raum durch einen Vergussraum (18) gebildet ist, in den das Umhüllungsmaterial (8) in einem Vergussverfahren in flüssiger Form eingefüllt ist und ausgehärtet ist.

2. Sensoranordnung nach Anspruch 1, **dadurch gekennzeichnet, dass** das Sensorelement (5) eine der Montagefläche (33) zugewandte Montageseite (51) und eine von der Montagefläche (33) abgewandte Sensorseite (51) aufweist, wobei das Sensorelement (5) eingerichtet ist, um ein an der Sensorseite (51) anliegendes physikalisches Signal, insbesondere ein magnetisches Signal, zu erfassen.

3. Sensoranordnung nach Anspruch 2, **dadurch gekennzeichnet, dass** die Sensorseite (51) von einer dünnen Schicht aus Umhüllungsmaterial (8) abgedeckt ist oder zumindest teilweise von der Abdeckung mit Umhüllungsmaterial (8) ausgenommen ist.

4. Sensoranordnung nach einem der vorstehenden Ansprüche, **dadurch gekennzeichnet, dass** das Rahmenteil (7) eine Stirnfläche (73) aufweist, die mit der umlaufenden Innenwandung (71) eine umlaufende Kante (72) bildet, und dass das Umhüllungsmaterial (8) in einer zu der Montagefläche (33) senkrechten Richtung gesehen bis zu der umlaufenden Kante (72) aufgefüllt ist.

5. Sensoranordnung nach einem der vorstehenden Ansprüche, **dadurch gekennzeichnet, dass** an dem Halter (3) an der von der Montagefläche (33) abgewandten Seite eine Schulter (32) angeformt ist, wobei die Schulter (32) in einem Auflagebereich des Rahmenteils (7) einen Außendurchmesser (D2) aufweist, der größer ausgebildet ist als der Durchmesser (D1) des Montagesockels (3).

6. Sensoranordnung nach Anspruch 5, **dadurch gekennzeichnet, dass** der Außendurchmesser (D3) des Rahmenteils (7) dem Außendurchmesser (D2) der Schulter (32) im Wesentlichen entspricht.

7. Sensoranordnung nach einem der vorstehenden Ansprüche, **dadurch gekennzeichnet, dass** an einer Seitenwand (35) des Montagesockels (31) wenigstens ein von der Seitenwand (35) abstehender Vorsprung (36) angeformt ist, an dem wenigstens eines der Kontaktelemente (6) festgelegt ist, und dass wenigstens ein Spalt (19) zwischen der mit dem wenigstens einen Vorsprung (36) versehenen Seitenwand (35) des Montagesockels (31) und der Innenwandung (71) des Rahmenteils (7) mit Umhüllungsmaterial (8) gefüllt ist und dass wenigstens eine elektrische Verbindungsstelle (17) in dem wenigstens einen Spalt (19) angeordnet ist.

8. Sensoranordnung nach einem der vorstehenden Ansprüche, **dadurch gekennzeichnet, dass** das Umhüllungsmaterial (8) auf der von dem Sensorelement (5) abgewandten Seite eine äußere Oberfläche (28) aufweist, die in Richtung zur Montagefläche (33) hin gesehen konkav gekrümmt ausgebildet ist.

9. Sensoranordnung nach einem der vorstehenden Ansprüche, **dadurch gekennzeichnet, dass** die Sensoranordnung (1) zur Erfassung eines magnetischen Signals ausgebildet ist, und das das Sensorelement (5) ein Hallsensorelement, insbesondere einen Hall-IC oder einen ASIC mit Hall-IC aufweist.

10. Verfahren zur Herstellung einer Sensoranordnung (1), insbesondere für ein Kraftfahrzeuggetriebe, mit folgenden Schritten:
- Herstellung eines Halters (3) mit einer Montagefläche (33) und mit an dem Halter (3) angeordneten Anschlusselementen (4),
- Bereitstellung eines Sensorelements (5) mit Kontaktelementen (6),
- Anordnung des Sensorelementes (5) an der Montagefläche (33) des Halters,
- Herstellung von elektrischen Verbindungsstellen (17) zwischen den Anschlusselementen (4) und den Kontaktelementen (6),
- Aufbringung eines wenigstens die Kontaktelemente (6) und die elektrischen Verbindungstellen (17) abdeckenden und das Sensorelement (5) zumindest teilweise abdeckenden Umhüllungsmaterials (8) auf den Halter (3), **dadurch gekennzeichnet, dass**
- der Halter (2) mit einem Montagesockel (31) mit einer Montagefläche (33) hergestellt wird und
- vor dem Schritte der Aufbringung des Umhüllungsmaterials (8) und vor oder nach dem Schritt der Herstellung der elektrischen Verbindungsstellen (17) ein Rahmenteil (7) an dem Halter (3) derart angeordnet wird, dass das Rahmenteil (7) den Montagesockel (31) umgibt und dass sich das Rahmenteil (7) in Richtung des Sensorelementes (5) über die Montagefläche (33) des Halters hinaus erstreckt und eine umlaufende Innenwandung (71) aufweist, die in einer Richtung parallel zur Montagefläche (33) gesehen einen Vergussraum (18) begrenzt,
- und dass das Umhüllungsmaterial (8) in den derart gebildeten Vergussraum (18) eingefüllt wird.

11. Verfahren nach Anspruch 10, **dadurch gekennzeichnet, dass** die Herstellung der elektrischen Verbindungsstellen (17) zwischen den Anschlusselementen (4) und den Kontaktelementen (6) durch Schweißen erfolgt.

## Claims

1. Sensor arrangement, in particular for a motor vehicle gearbox, comprising a holder (3) having connection elements (4) arranged on it and a sensor element (5) having contact elements (6), wherein the sensor element (5) is arranged on a mounting surface (33) of the holder (3), and the connection elements (4) are electrically connected to the contact elements (6) at electrical connecting points (17), and the sensor arrangement (1) has a encapsulation material (8) which is applied to the holder (3) and covers at least the contact elements (6) and the electrical connecting points (17) and at least partially covers the sensor element (5), wherein the holder (3) has a mounting base (31) on which the mounting surface (33) is formed, wherein the mounting base (31) is surrounded by a frame part (7), and the frame part (7) extends beyond the mounting surface (33) of the holder (3) in the direction of the sensor element (5) and has a circumferential inner wall (71) which, as seen in a direction parallel to the mounting surface (33), delimits a space into which the encapsulation material (8) is introduced, **characterized in that** the space is formed by a potting space (18) into which the encapsulation material (8) is filled in liquid form during a potting process and cured.

2. Sensor arrangement according to Claim 1, **characterized in that** the sensor element (5) has a mounting side (51), which faces the mounting surface (33), and a sensor side (51), which is averted from the mounting surface (33), wherein the sensor element (5) is designed to detect a physical signal which is applied to the sensor side (51), in particular a magnetic signal.

3. Sensor arrangement according to Claim 2, **characterized in that** the sensor side (51) is covered by a thin layer of encapsulation material (8) or is at least partially excluded from being covered by encapsulation material (8).

4. Sensor arrangement according to one of the preceding claims, **characterized in that** the frame part (7) has an end surface (73) which, with the circumferential inner wall (71), forms a circumferential edge (72), and **in that** the encapsulation material (8), as seen in a direction perpendicular to the mounting surface (33), is filled up to the circumferential edge (72).

5. Sensor arrangement according to one of the preceding claims, **characterized in that** a shoulder (32) is integrally formed on the holder (3) on that side which is averted from the mounting surface (33), wherein the shoulder (32), in a bearing region of the frame part (7), has an outside diameter (D2) which is larger than the diameter (D1) of the mounting base (3).

6. Sensor arrangement according to Claim 5, **characterized in that** the outside diameter (D3) of the frame part (7) substantially corresponds to the outside diameter (D2) of the shoulder (32).

7. Sensor arrangement according to one of the preceding claims, **characterized in that** at least one protrusion (36), which projects from a side wall (35), is integrally formed on the side wall (35) of the mounting base (31) and at least one of the contact elements (6) is fixed to the said projection, and **in that** at least one gap (19) between the side wall (35), which is provided with the at least one protrusion (36), of the mounting base (31) and the inner wall (71) of the frame part (7) is filled with encapsulation material (8), and **in that** at least one electrical connecting point (17) is arranged in the at least one gap (19).

8. Sensor arrangement according to one of the preceding claims, **characterized in that** the encapsulation material (8), on that side which is averted from the sensor element (5), has an outer surface (28) which, as seen in the direction of the mounting surface (33), is of concavely curved design.

9. Sensor arrangement according to one of the preceding claims, **characterized in that** the sensor arrangement (1) is designed to detect a magnetic signal, and the the sensor element (5) has a Hall sensor element, in particular a Hall IC or an ASIC with a Hall IC.

10. Method for producing a sensor arrangement (1), in particular for a motor vehicle gearbox, comprising the following steps:
- producing a holder (3) having a mounting surface (33) and having connection elements (4) which are arranged on the holder (3),
- providing a sensor element (5) having contact elements (6),
- arranging the sensor element (5) on the mounting surface (33) of the holder,
- producing electrical connecting points (17) between the connection elements (4) and the contact elements (6),
- applying an encapsulation material (8), which covers at least the contact elements (6) and the electrical connecting points (17) and at least partially covers the sensor element (5), to the holder (3), **characterized in that**
- the holder (2) is produced with a mounting base (31) having a mounting surface (33), and
- before the steps of applying the encapsulation material (8) and before or after the step of producing the electrical connecting points (17), a frame part (7) is arranged on the holder (3) in such a way that the frame part (7) surrounds the mounting base (31) and that the frame part (7), in the direction of the sensor element (5), extends beyond the mounting surface (33) of the holder and has a circumferential inner wall (71) which, as seen in a direction parallel to the mounting surface (33), delimits a potting space (18),
- and **in that** the encapsulation material (8) is filled into the potting space (18) which is formed in this way.

11. Method according to Claim 10, **characterized in that** the electrical connecting points (17) between the connection elements (4) and the contact elements (6) are produced by welding.

## Revendications

1. Système de capteur, en particulier destiné à une transmission de véhicule automobile, comprenant un support (3) sur lequel sont disposés des éléments de raccordement (4) et un élément capteur (5) muni d'éléments de contact (6), dans lequel l'élément capteur (5) est disposé sur une surface de montage (33) du support (3) et les éléments de raccordement (4) sont reliées électriquement au niveau de points de liaison électriques (17) aux éléments de contact (6) et le système de capteur (1) comporte un matériau d'enrobage appliqué sur le support (3) est recouvrant au moins les éléments de contact (6) et les points de liaison électriques (17) et recouvrant au moins partiellement l'élément capteur (5), dans lequel le support (3) comporte un socle de montage (31) sur lequel est formée la surface de montage (33), dans lequel le socle de montage (31) est entouré par une partie de châssis (7) et la partie de châssis (7) part du support (3) dans la direction de l'élément capteur (5) par l'intermédiaire de la surface de montage (33) et comporte une paroi interne circonférentielle (71) qui délimite un espace vu dans une direction parallèle à la surface de montage (33), dans lequel est introduit le matériau d'enrobage (8), **caractérisé en ce que** l'espace est formé par un espace de moulage (18) dans lequel le matériau d'enrobage (8) est introduit sous forme fluide conformément à un procédé de moulage et dans lequel il est durci.

2. Système de capteur selon la revendication 1, **caractérisé en ce que** l'élément capteur (5) comporte un côté de montage (51) tourné vers la surface de montage (33) et un côté capteur (51) tourné en sens opposé à la surface de montage (33), dans lequel l'élément capteur (5) est conçu pour détecter un signal physique appliqué au côté capteur (51), en particulier un signal magnétique.

3. Système de capteur selon la revendication 2, **caractérisé en ce que** le côté capteur (51) est recouvert par une couche mince de matériau d'enrobage (8) ou est au moins partiellement dépourvu du recouvrement par le matériau d'enrobage (8).

4. Système de capteur selon l'une quelconque des revendications précédentes, **caractérisé en ce que** la partie de châssis (7) présente une surface avant (73) qui forme, avec la paroi interne circonférentielle (71), une arête circonférentielle (72), et **en ce que** le matériau d'enrobage (8) est introduit jusqu'à l'arête circonférentielle (72) vue dans une direction perpendiculairement à la surface de montage (33).

5. Système de capteur selon l'une quelconque des revendications précédentes, **caractérisé en ce qu'**un épaulement (32) est façonné sur le support (3) du côté qui est tourné à l'opposé de la surface de montage entre parenthèses (33), dans lequel l'épaulement (32) présente un diamètre extérieur (D2), dans une zone d'appui de la partie de châssis (7), qui est réalisé de manière à être supérieur au diamètre (D1) du socle de montage (3).

6. Système de capteur selon la revendication 5, **caractérisé en ce que** le diamètre extérieur (D3) de la partie de châssis (7) correspond sensiblement au diamètre extérieur (D2) de l'épaulement (32).

7. Système de capteur selon l'une quelconque des revendications précédentes, **caractérisé en ce qu'**au moins une protubérance (36) faisant saillie par rapport à la paroi latérale (35) est façonnée sur une paroi interne (35) du socle de montage (31), protubérance sur laquelle est fixé au moins l'un des éléments de contact (6), et **en ce qu'**au moins un interstice (19) entre la paroi latérale (35) du socle de montage (31), munie de l'au moins une protubérance (36), et la paroi interne (71) de la partie de châssis (7), est rempli de matériau d'enrobage (8) et **en ce qu'**au moins un point de liaison électrique (17) est disposé dans l'au moins un interstice (19).

8. Système de capteur selon l'une quelconque des revendications précédentes, **caractérisé en ce que** le matériau d'enrobage (8) présente, sur le côté qui est tourné à l'opposé de l'élément capteur (5), une surface extérieure (28) qui est formée de manière incurvée afin d'être concave lorsqu'on l'observe dans la direction orientée vers la surface de montage (33).

9. Système de capteur selon l'une quelconque des revendications précédentes, **caractérisé en ce que** le système de capteur (1) est conçu pour détecter un signal magnétique et le l'élément capteur (5) comporte un élément capteur à effet Hall, en particulier un circuit intégré Hall ou un circuit ASIC à circuit intégré Hall.

10. Procédé de fabrication d'un système de capteur (1), en particulier destiné à une transmission de véhicule automobile, comportant les étapes consistant à
- réaliser un support (3) présentant une surface de montage (33) et des éléments de raccordement (4) disposés sur le support (3),
- fournir un élément capteur (5) ayant des éléments de contact (6),
- disposer l'élément capteur (5) sur la surface de montage (33) du support,
- réaliser des points de liaison électriques (17) entre les éléments de raccordement (4) et les éléments de contact (6),
- appliquer un matériau d'enrobage (9) sur le support (3), recouvrant au moins les éléments de contact (6) et les points de liaison électriques (17) et recouvrant au moins partiellement l'élément capteur (5), **caractérisé en ce que**
- le support (2) est réalisé de manière à comporter un socle de montage (31) présentant une surface de montage (33), et
- avant l'étape consistant à appliquer le matériau d'enrobage (8) et avant ou après l'étape consistant à réaliser les points de liaison électriques (17), une partie de châssis (7) est disposée sur le support (3) de manière à ce que la partie de châssis (7) entoure le socle de montage (31) et à ce que la partie de châssis (7) s'étende dans la direction de l'élément capteur (5) par l'intermédiaire de la surface de montage (33) du support et présente une paroi interne circonférentielle (71) qui délimite un espace de moulage (18) vu dans une direction parallèle à la surface de montage (33),
- et **en ce que** le matériau d'enrobage (8) est introduit dans l'espace de moulage (18) ainsi formé.

11. Procédé selon la revendication 10, **caractérisé en ce que** la réalisation des points de liaison électriques (17) entre les éléments de raccordement (4) et les éléments de contact (6) est effectuée par soudage.
